**Europäisches Patentamt**

**European Patent Office**

**Office européen des brevets**

(19)

(11) Veröffentlichungsnummer: **0 045 363**
**B1**

(12)

# EUROPÄISCHE PATENTSCHRIFT

(45) Veröffentlichungstag der Patentschrift:
16.01.85

(51) Int. Cl.⁴: **C 08 L 95/00, E 01 C 7/18**

(21) Anmeldenummer: 81104388.4

(22) Anmeldetag: 06.06.81

(54) **Bituminöses Bindemittel, Verfahren zu seiner Herstellung und Verwendung.**

(30) Priorität: 26.07.80 DE 3028365

(43) Veröffentlichungstag der Anmeldung:
10.02.82 Patentblatt 82/6

(45) Bekanntmachung des Hinweises auf die Patenterteilung:
16.01.85 Patentblatt 85/3

(84) Benannte Vertragsstaaten:
AT BE CH DE FR GB IT LI NL SE

(56) Entgegenhaltungen:
DE - C - 800 685
FR - A - 2 175 209
US - A - 2 570 185
US - A - 2 663 672
US - A - 4 036 661
US - A - 4 173 489

**Die Akte enthält technische Angaben, die nach dem Eingang der Anmeldung eingereicht wurden und die nicht in dieser Patentschrift enthalten sind.**

(73) Patentinhaber: Degussa Aktiengesellschaft,
Weissfrauenstrasse 9, D-6000 Frankfurt am Main 1 (DE)

(72) Erfinder: Müller, Karl-Hans, Dr., Robert-Koch-Strasse 17,
D-6454 Bruchköbel (DE)
Erfinder: Barthel, Walter, Gartenstrasse 7,
D-6456 Langenselbold (DE)

EP 0 045 363 B1

ACTORUM AG

## Beschreibung

Bituminöse Bindemittel werden zu den verschiedensten Zwecken eingesetzt. Sie werden beispielsweise beim Strassenbau, bei Industriefussböden, bei Estrichen, bei Bautenschutzanstrichen, bei Dachbeschichtungen, bei Dachbahnen, beim Unterbodenschutz für Kraft- und Schienenfahrzeuge und bei Kabelmassen verwendet.

Es ist bekannt, derartigen bituminösen Bindemitteln zur Verbesserung der Haftung an Füllstoffen oder anderen zu beschichtenden Oberflächen langkettige Amine zuzusetzen (vgl. Druckschrift 'Goldschmidt informiert 4/78 Nr. 46).

Derartige aminhaltigen bituminöse Bindemittel weisen jedoch den Nachteil auf, dass auf Grund der Wärmeinstabilität der langkettigen Amine ihre Haftfestigkeit stark beeinträchtigt wird. Die FR-A 2 175 209 betrifft Asphaltmassen mit hohem Haftvermögen, die Aminoalkylpolyalkoxysilane enthalten. Die DE-PS 800 685 betrifft ein Verfahren zur Verbesserung der Haftfestigkeit bituminöser Bindemittel durch Verwendung von Silanen der Formel $SiR_mX_n$. Die zu überziehenden Materialien werden vor dem Aufbringen der bituminösen Stoffe mit Dämpfen oder Lösungen der Siliciumverbindungen vorbehandelt. Diese können aber auch in gelöster Form den bituminösen Bindemitteln zugesetzt werden (Seite 2, rechte Spalte, Zeilen 65–74). In der US-PS 4 036 661 werden ebenfalls Asphaltmassen beschrieben, in denen Aminosilane zur Verbesserung der Haftung zwischen Bitumen und mineralische Füllstoffe eingesetzt werden. Genannt wird dort unter anderem auch Mercaptopropyltrimethoxisilan (Tabelle 5, Versuch Nr. 6). Aminoalkylalkoxysilane, die in R propoxylierten Asphaltmischungen eingesetzt werden, sind in der US-PS 4 173 489 offenbart (Anspruch 4).

Gegenstand der Erfindung ist ein bituminöses Bindemittel, das dadurch gekennzeichnet ist, dass es 0.05 bis 2 Gew.%
Bis-(3-[triäthoxysilyl-]propyl)tetrasulfan
Bis-(3-[triäthoxysilyl-]propyl)trisulfan und/oder
Bis-(3-[triäthoxysilyl-]propyl)disulfan
enthält. Diese Verbindungen werden im folgenden Text als Silan bezeichnet.

In einer bevorzugten Ausführungsform der Erfindung kann das bituminöse Bindemittel 0,5 bis 1,5 Gew.% dieser Silane enthalten.

Erfindungsgemäss kann das bituminöse, Silan enthaltende Bindemittel hergestellt werden, indem man das bituminöse Bindemittel auf eine Temperatur von 120 bis 230°C erhitzt und das Silan einrührt.

In einer Ausführungsform der Erfindung kann man das Silan vor dem Einrühren in das bituminöse Bindemittel mit einer synthetischen, amorphen Fällungskieselsäure zu einem Pulverkonzentrat vermischen. Das Pulverkonzentrat kann 65 bis 68 Gew.% Silan und 32 bis 35 Gew.% gefällte, sprühgetrocknete Kieselsäure enthalten.

Das erfindungsgemässe bituminöse Bindemittel kann zur Herstellung von Walzasphalt für den Strassenbau und dort auch zur Herstellung von Sonderbelägen, wie z.B. für Brücken verwendet werden. Ebenso kann es für die Herstellung von Gussasphalt für Strassenbau oder Hochbau (z.B. Industriefussboden und Estriche) oder die Herstellung von Dachbeschichtungen, Dachbahnen, Unterbodenschutz für Fahrzeuge oder Kabelmassen verwendet werden. Auf Grund des Silangehaltes zeigt das erfindungsgemässe bituminöse Bindemittel eine ausgezeichnete Verbesserung der Haftfestigkeit.

Beispiel

Analog DIN 1996, Blatt 2, 3, 10 werden Asphaltmischungen hergestellt und geprüft. Ausgewählt wird ein haftungsmässig kritisches Gestein: Taunusquarzit-Edelsplitt 8/11 der Taunus-Quarzit-Werke GmbH, Bad Homburg v.d.H. Als bituminöses Bindemittel wird Bitumen B 200 verwendet, das jeweils auf 125°C erhitzt und mit dem angegebenen Silan vermischt wird.

| Mischung | verwendete Bindemittel |
|---|---|
| 1 | 99 Gew.-Teile B 200 |
| | 1 Gew.-Teil Si 69 |
| 2 | 98,2 Gew.-Teile B 200 |
| | 1,8 Gew.-Teile Pulverkonzentrat |
| | 66,7 % Si 69 |
| | 33,3 % Sipernat® 22 |

Si 69 hat die chemische Struktur
Bis-(3-[triäthoxysilyl]–propyl)tetrasulfan

| Bezeichnung | Erweichungspunkt Ring und Kugel °C | Bindemittelfreie Gesteinsoberfläche Gew.-Teile | Verbesserung in % Ausgangswerte 40 Gew.-Teile = 0 % |
|---|---|---|---|
| 0 | 42,6 | 40 | 0 |
| 1 | 40,2 | 15 | 63 |
| 2 | | 15 | 63 |

Mit der Mischung 2 wird unter Luftabschluss eine Wärmelagerung über 24 Stunden bei 150°C durchgeführt. Die anschliessend durchgeführte Haftprüfung bringt exakt die gleichen Resultate, wie die unbehandelten Proben. Damit wird die Temperatur- bzw. Lagerunempfindlichkeit bestätigt.

Wie aus den Prüfnoten zu ersehen ist, eignet sich das eingesetzte Silan als Haftverbesserer in bituminösen Systemen. Wegen der Geruchs- und Dampfentwicklung während der Heissverarbeitung ist für die Praxis ausser der Verbesserung der Haftwirkung ein möglichst hoher Siedepunkt des Silans von Bedeutung.

Überprüfung in Pulverform (66,7 % Silan, 33,3 % SIPERNAT® 22). 24-stündige Wärmelagerung bei 150°C unter Luftabschluss.
Festgestellt wurde: Die Haftwirkung des Pulverkonzentrates bleibt voll erhalten, die Wärmelagerung hat keinen negativen Einfluss. Diese Erkenntnisse sind sehr wesentlich, damit den Silan-Pulverkonzentraten eine günstige Vertriebsform und weiter hin eine für die Praxis gesehen einfache Dosierart in bituminöse Systeme vorliegt. Setzt man die Silane dem heissen Bitumen direkt zu, so erniedrigt sich der Erweichungspunkt «Ring und Kugel in °C» um durchschnittlich 2 Punkte (2°C), was eine in vielen Fällen gewünschte Viskositätsverringerung bedeutet. Die Wärmestabilität, d.h., Beibehaltung der haftverbessernden Wirkung nach Wärmelagerung, stellt eine wesentliche Verbesserung gegenüber der Haftzusätze auf der Basis langkettiger Amine dar. Von diesen Produkten ist bekannt, dass sie erst kurz vor der Verarbeitung den bituminösen Bindemittel zugegeben werden können und nicht wärmelagerungsstabil sind.

## Patentansprüche

1. Bituminöses Bindemittel, dadurch gekennzeichnet, dass es 0.05 bis 2 Gew.% Bis-(3-[triäthoxysilyl-]propyl)tetrasulfan Bis-(3-[triäthoxysilyl-]propyl)trisulfan und/oder Bis-(3-[triäthoxysilyl-]propyl)disulfan enthält.

2. Verfahren zur Herstellung des bituminösen Bindemittels gemäss Anspruch 1, dadurch gekennzeichnet, dass man das bituminöse Bindemittel auf eine Temperatur von 120 bis 230°C erhitzt und das Silan einrührt.

3. Verfahren nach Anspruch 2, dadurch gekennzeichnet, dass man das Silan vor dem Einrühren in das bituminöse Bindemittel mit einer synthetischen, amorphen Fällungskieselsäure zu einem Pulverkonzentrat vermischt.

4. Verfahren nach Anspruch 3, dadurch gekennzeichnet, dass das Pulverkonzentrat 65 bis 68 Gew.% Silan enthält.

5. Verwendung des bituminösen Bindemittel zur Herstellung von Asphaltbelägen für den Strassenbau und für den Hochbau (Industriefussböden, Estriche).

## Claims

1. A bituminous binder, characterised in that it contains from 0,05 to 2% by weight of bis-(3-[triethoxysilyl-]propyl)tetrasulphane, bis-(3-[triethoxysilyl-]propyl)trisu phane and/or bis-(3-[triethoxysilyl-]propyl)disulphane.

2. A process for the production of the bituminous binder according to claim 1, characterised in that the bituminous binder is heated to a temperature of from 120 to 230°C and the silane is stirred in.

3. A process according to claim 2, characterised in that the silane is mixed with a synthetic, amorphous precipitated silica to produce a powder concentrate before it is stirred into the bituminous binder.

4. A process according to claim 3, characterised in that the powder concentrate contains from 65 to 68% silane.

5. The use of the bituminous binder for the production of asphalt coatings for the building of roads and the construction of buildings (such as for industrial flooring and stone floors).

## Revendications

1. Liant bitumineux caractérisé en ce qu'il contient 0,5 à 2% en poids de Bis-(3-[triéthoxysilyl-]propyl)tétrasulfane Bis-(3-[triéthoxysilyl-]propyl)trisulfane et/ou Bis-(3-[triéthoxysilyl-]propyl)disulfane

2. Procédé pour la fabrication du liant bitumineux suivant la revendication 1, caractérisé en ce que l'on chauffe le liant bitumineux à une température de 120 à 230°C et y incorpore le silane en agitant.

3. Procédé suivant la revendication 2, caractérisé en ce que l'on mélange le silane, avant de l'introduire sous agitation dans le liant bitumineux, avec un acide silicique synthétique, amorphe, de précipitation, en un concentré pulvérulent.

4. Procédé suivant la revendication 3, caractérisé en ce que le concentré pulvérulent contient 65 à 68% en poids de silane.

5. Utilisation du liant bitumineux pour l'établissement de couches d'asphalte pour la construction de routes et pour le bâtiment (sols industriels, aires de stationnement).